# EUROPEAN PATENT APPLICATION

(11) **EP 3 904 209 A1**
(43) Date of publication of application: **03.11.2021**
(21) Application number: 20315232.7
(22) Date of filing: 30.04.2020
(51) Int. Cl.: B64D 11/06, A47C 7/66, B60N 2/60, B60N 2/90, E04H 15/38

(54) **CANOPY ASSEMBLY FOR SEAT OF MASS TRANSPORTATION VEHICLE**

(71) Applicant: UUDS AERO, 95700 Roissy en France (FR)
(72) Inventor: Ehrhard, Julian, 60300 Senlis (FR)
(74) Representative: BCF Global

(57) **Abstract**

A canopy assembly for a seat of a mass transportation vehicle is provided. The canopy has a retractable frame assembly, a flexible canopy supported by the frame assembly, and at least one non-permanent fastener for removably connecting the canopy assembly to the seat. The frame assembly has at least one rear frame member, and at least one front frame member pivotally connected to the at least one rear frame member about a pivot axis. The canopy has a collapsed configuration and an extended configuration. In the extended configuration, when the canopy assembly is provided on the seat, the canopy assembly defines a generally arch-shaped cover over a passenger seating area of the seat.

## Description

### CROSS-REFERENCE

### None

### FIELD OF TECHNOLOGY

The present technology relates to canopy assemblies for seats of mass transportation vehicles.

### BACKGROUND

Mass transportation vehicles, such as aircraft, trains and buses have seat arrangements which attempt to maximize the number of passengers. With some exceptions, such as in first class or business class in aircraft, this results in the seats, and therefore the passengers, being close to each other.

Such proximity offers little privacy to the passengers. Additionally, this proximity offers little protection for a passenger from infectious aerosols and spray droplets that may be expelled from the mouths of nearby passengers sneezing or coughing.

One known solution consists in providing fixed rigid partitions between adjacent seats. However, such partitions can get in the way of the passengers attempting to enter or exit their seats. Also, the size of such partitions can be limited by vehicle certification requirements, such as in aircraft, thus limiting the protection they can provide. Additionally, these result in additional maintenance for the vehicle's cleaning crew as they have to be cleaned in the vehicle. Also, since the partitions have to be cleaned and decontaminated at their fixed locations, thoroughly cleaning and disinfecting the surfaces of the partitions can be difficult. Finally, these can add substantial weight to the vehicle, which results in additional fuel consumption for the vehicle.

There is therefore a need for a device for a seat of a mass transportation vehicle that can offer the passenger occupying the seat some privacy and some level of protection from infectious aerosols and spray droplets that may be expelled from the mouths of other passengers.

### SUMMARY

It is an object of the present technology to ameliorate at least some of the inconveniences present in the prior art.

According to one aspect of the present technology, there is provided a canopy assembly for a seat of a mass transportation vehicle. The canopy has a retractable frame assembly. The frame assembly has at least one rear frame member, and at least one front frame member pivotally connected to the at least one rear frame member about a pivot axis. The at least one front frame member is pivotable between a first position and a second position. The at least one front frame member pivots from the first position to the second position by pivoting away from the at least one rear frame member. The at least one front frame member pivots from the second position to the first position by pivoting toward the at least one rear frame member. The canopy assembly also has a flexible canopy supported by the retractable frame assembly. The canopy has a top, a left side and a right side. The canopy has a collapsed configuration and an extended configuration. The canopy is in the collapsed configuration when the at least one front frame member is in the first position. The canopy is in the extended configuration when the at least one front frame member is in the second position. At least one non-permanent fastener connected to at least one of the at least one rear frame member and the canopy for removably connecting the canopy assembly to the seat. In the extended configuration, when the canopy assembly is provided on the seat, the top of the canopy is disposed at least partially above a passenger seating area of the seat, the left side of the canopy at least partially covers a left side of the passenger seating area, and the right side of the canopy at least partially covers a right side of the passenger seating area such that the canopy assembly defines a generally arch-shaped cover over the passenger seating area.

According to some aspects of the present technology, the canopy defines a plurality of sleeves. Each of the at least one rear frame member and each the at least one front frame member is received in a corresponding sleeve of the plurality of sleeves.

According to some aspects of the present technology, the at least one rear frame member is a generally C-shaped frame member having a laterally extending portion, a left arm extending from a left end of the laterally extending portion to the pivot axis, and a right arm extending from a right end of the laterally extending portion to the pivot axis.

According to some aspects of the present technology, the at least one front frame member includes, a left arm extending radially from the pivot axis, and a right arm extending radially from the pivot axis. The left arm is laterally spaced from the right arm. The left arm being separate from the right arm.

According to some aspects of the present technology, the frame assembly further includes at least one intermediate frame member pivotally connected to the at least one rear frame member about the pivot axis. The at least one intermediate frame member is disposed at least in part longitudinally between the at least one rear frame member and the at least one front frame member when the at least one front frame member is in the second position.

According to some aspects of the present technology, the at least one intermediate frame member is a generally C-shaped frame member having a laterally extending portion, a left arm extending from a left end of the laterally extending portion to the pivot axis, and a right arm extending from a right end of the laterally extending portion to the pivot axis.

According to some aspects of the present technology, the at least one intermediate frame member is two intermediate frame members.

According to some aspects of the present technology, a front portion of the top of the canopy defines a recess.

According to some aspects of the present technology, in the extended configuration the top of the canopy has an arcuate lateral profile, with a front end of the canopy being vertically lower than a rear end of the canopy.

According to some aspects of the present technology, at least one connector selectively connects to the canopy for maintaining the canopy in the collapsed configuration and the at least one front frame member in the first position.

According to some aspects of the present technology, the canopy has a rear side extending vertically downward from a rear end of the top of the canopy and extending laterally between the left and right sides of the canopy.

According to some aspects of the present technology, the at least one non-permanent fastener is connected to a rear surface of the rear side of the canopy.

According to some aspects of the present technology, the at least one non-permanent fastener includes a left non-permanent fastener connected to a rear portion of the left side of the canopy and a right non-permanent fastener connected to a rear portion of the right side of the canopy.

According to some aspects of the present technology, the at least one non-permanent fastener is at least one band of a hook and loop fastener.

According to some aspects of the present technology, the canopy is made from non-woven textile.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a perspective view of a portion of an aircraft cabin having a seat provided with a canopy assembly, with a canopy of the canopy assembly being in an extended configuration, the canopy being illustrated in transparency such that the position in the canopy assembly of the passenger occupying the seat can be seen;
Figure 2 is a perspective view, taken from a front, left side of the canopy assembly of Figure 1, with the canopy being in the extended configuration;
Figure 3 is a perspective view, taken from the front, left side of the canopy assembly of Figure 2, with the canopy being in a collapsed configuration;
Figure 4 is a perspective view, taken from a front, left side of a frame assembly of the canopy assembly of Figure 2, with the frame assembly being in a position corresponding to the extended configuration of the canopy; and
Figure 5 is a side elevation view of a lower end of an arm of the frame assembly of Figure 4.

### DETAILED DESCRIPTION

A canopy assembly 10 of the present technology will be described in use with a passenger seat 12 of an aircraft. It is contemplated that the present technology could be used with seats of other types of mass transportation vehicles, such as, but not limited to, trains and buses.

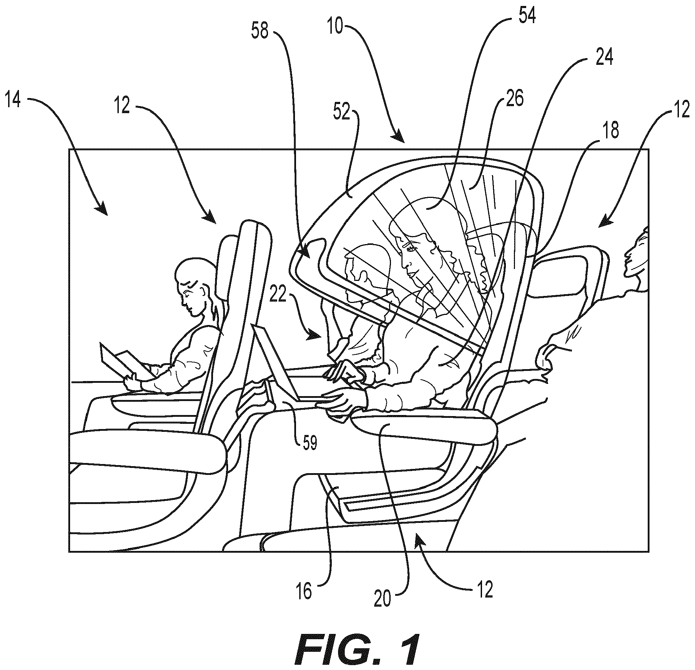

With reference to Figure 1, an aircraft cabin 14 has a plurality of passenger seats 12. Each passenger seat 12 has a seat bottom 16, a backrest 18, and armrests 20. The backrest 18 can partially recline. The seat bottom 16 and backrest 18 define a passenger seating area 22 that is occupied by a passenger 24 when the passenger 24 sits in the passenger seat 12. It is contemplated that in some embodiments the armrests 20 could be omitted and/or that the backrest 18 could not recline.

As can be seen, one of the passenger seats 12 is provided with the canopy assembly 10. The canopy assembly 10 is shown in transparency in Figure 1 to allow the position of the passenger 24 in the canopy assembly 10 to be seen. As will be discussed in more detail below, the canopy assembly 10 is opaque to provide privacy to the passenger 24. The canopy assembly 10 is non-permanently connected to the backrest 18 so as to be easily installed on and removed from the passenger seat 12 as will be explained in greater detail below.

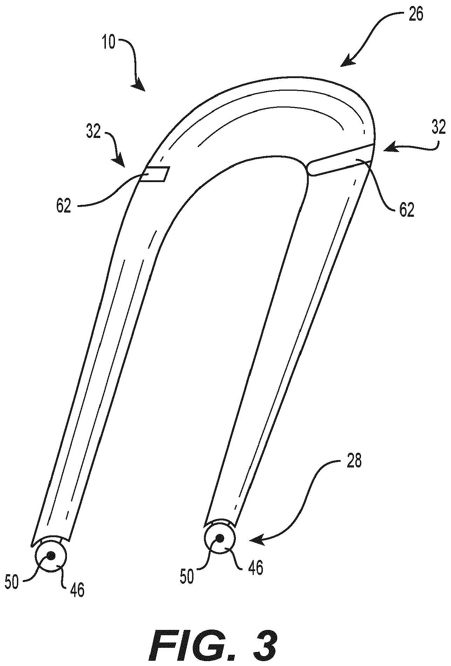

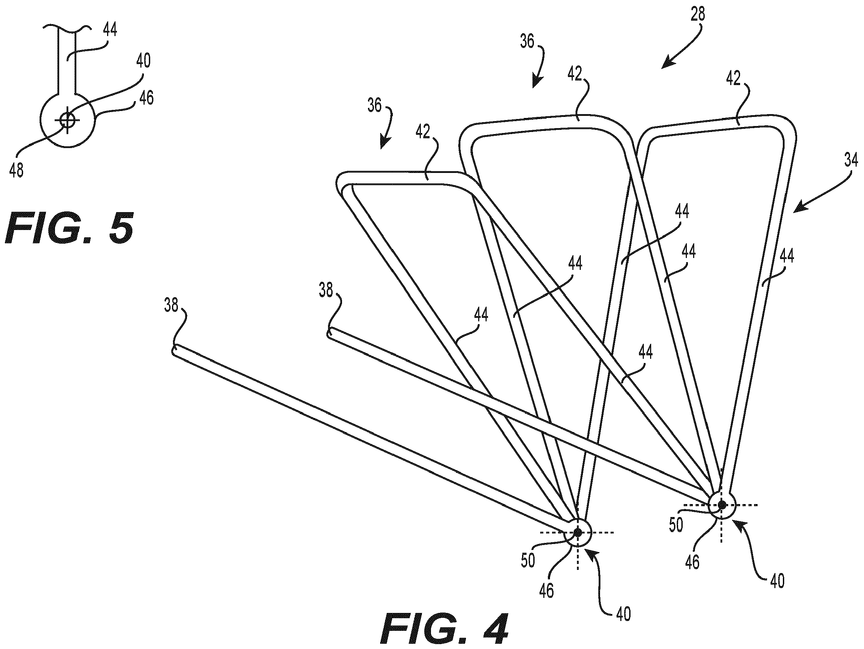

The canopy assembly 10 includes a flexible canopy 26 and a retractable frame assembly 28 (Figure 4). As can be seen in Figure 1, when the canopy 26 is in an extended configuration, the canopy assembly 26 defines a generally arch-shaped cover over the passenger seating area 22, and therefore over the passenger 24 sitting in the seat. This provides privacy for the passenger 24. Additionally, this can provide some level of protection from infectious aerosols and spray droplets that may be expelled from the mouths of other nearby passengers, by providing a barrier around the head of the passenger 24. The canopy 26 can also be placed in a collapsed configuration, as shown in Figure 3, when the passenger 24 does not desire to be covered by the canopy assembly 10, to discuss with an adjacent passenger for example, or when entering or exiting the passenger seat 12.

The materials used in the construction of the canopy assembly 10 meet the standards for their intended use, which in the present embodiment are aircraft standards, such as fire and smoke resistance standards. In the present embodiment, the canopy assembly 10 is intended to be used a single time (i.e. for a single flight), and is then discarded or recycled. It is contemplated that in other embodiments, only the canopy 26 could be discarded or recycled and that the frame assembly 28 could be reused with a new canopy 26, preferably after the frame assembly 28 has been cleaned and disinfected. It is also contemplated that in other embodiments, the canopy assembly 10 could be removed from the seat 12, be cleaned and disinfected, and then be reinstalled on another passenger seat 12 for another flight.

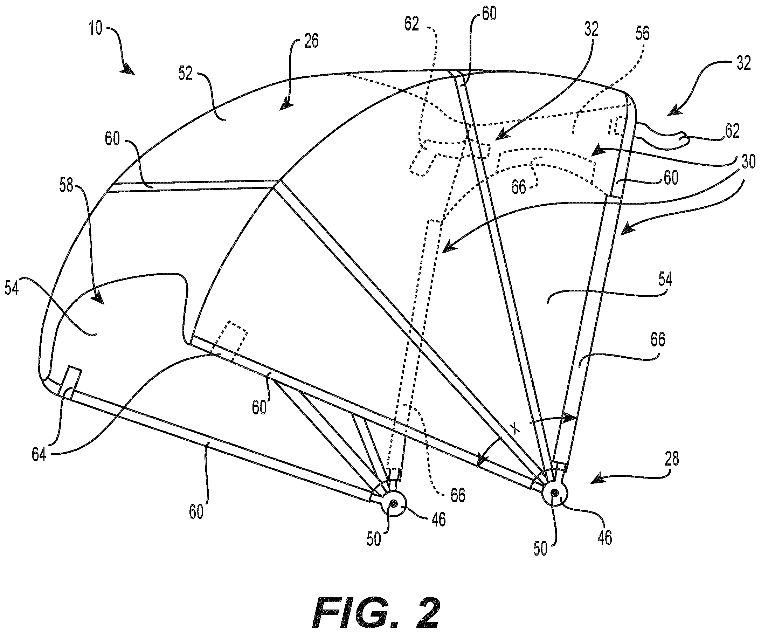

Turning now to Figures 2 to 5, the canopy assembly 10 will be described in more detail. As described above, the canopy assembly 10 includes the canopy 26 and the frame assembly 28. The frame assembly 28 supports the canopy 26 as will be described in more detail below. The canopy assembly 10 also includes non-permanent fasteners 30 used to removably connect the canopy assembly 10 to the backrest 18 of the passenger seat 12. The canopy assembly 28 also includes two connectors 32 used to maintain the canopy 26 in its collapsed configuration and to maintain the frame assembly 28 in its corresponding position.

With reference to-Figure 4, the retractable frame assembly 28 includes a rear frame member 34, two intermediate frame members 36 and two front frame members 38 that are pivotally connected to each other about a pivot axis 40. When the frame members 34, 36, 38 are in their positions corresponding to the extended configuration of the canopy 26 as shown in Figure 4, the intermediate frame members 36 are longitudinally between the rear and front frame members 34, 38. Each of the rear and intermediate frame members 34, 36 is a generally C-shaped frame member 34, 36. Each C-shaped frame member 34, 36 has a laterally extending portion 42, a left arm 44 extending from the left end of the laterally extending portion 42 to the pivot axis 40 and a right arm 44 extending from the right end of the laterally extending portion 42 to the pivot axis 40. In the present embodiment, for each C-shaped frame member 34, 36, the laterally extending portion 42 and the left and right arms 44 are integrally formed as a single part, but it is contemplated that they could be separate parts assembled together. In the present embodiment, the laterally extending portions 42 are generally straight, but it is contemplated that one or more of the laterally extending portions 42 could be arcuate or could have another shape. The left and right arms 44 are generally straight, but it is contemplated that they could have another shape in alternative embodiments. The two front frame members 38 are a left arm 38 that extends radially away from the pivot axis 40 and a right arm 38 that extends radially away from the pivot axis 40. The left and right arms 38 are generally straight, but it is contemplated that they could have another shape in alternative embodiments. As can be seen, the left and right arms 38 are laterally spaced from each other. The left and right arms 38 are separate from each other, unlike the left and right arms 44 of the C-shaped members 34, 36 that are connected to each other by the laterally extending portions 42. It is contemplated that in some embodiments the two front frame members 38 could be replaced by a single front frame member similar to the C-shaped members 34, 36. It is also contemplated that one or more of the C-shaped members 34, 36 could be replaced by two frame members similar to the front frame members 38. It is also contemplated that one or both of the intermediate frame members 36 could be omitted. It is also contemplated that more than two intermediate frame member 36 could be provided. In the present embodiment, the frame members 34, 36, 38 are made of flexible plastic, but other materials are contemplated.

As can be seen in Figure 5 for one of the arms 44, a lower end of each of the arms 38, 44 defines a disc 46. Each disc 46 defines an aperture 48 at a center thereof. The frame members 34, 36 and 38 are pivotally connected to each other by laterally stacking the discs 46 of the left arms 38, 44 such that their apertures 48 align and inserting a rivet 50 through their apertures 48, and by laterally stacking the discs 46 of the right arms 38, 44 such that their apertures 48 align and inserting a rivet 50 through their apertures 48. The rivets 50 define the pivot axis 40. It is contemplated that the rivets 50 could be replaced by other types of fastener that permits pivoting of the frame members 34, 36 and 38 relative to each other, such as, but not limited to, nuts and bolts, cotter pins, and push pins. In the present embodiment, the rivets 50 are made of flexible plastic, but other materials are contemplated. The use of plastic components in the construction of the frame assembly 28 provides for a lightweight canopy assembly 10 that can be easily manipulated and reduces the impact on energy consumption of the vehicle in which canopy assemblies 10 are provided.

To put the canopy 26 in the extended configuration shown in Figure 2, the front and intermediate frame members 36 are pivoted away from the rear frame member 34 to the positions shown in Figure 4. This is done by pulling forward on the front of the canopy 26. To put the canopy 36 in the collapsed configuration shown in Figure 3, the front and intermediate frame members 36 are pivoted toward the rear frame member 34. This is done by pushing rearward on the front of the canopy 26. It is contemplated that the canopy 26 could have configurations intermediate the extended and collapsed configurations by providing the connections between the frame members 34, 36, 38 with ratcheting mechanisms or other similar mechanisms.

Turning now to Figure 2, the flexible canopy 26 will be described in more detail. The shape of the canopy 26 will be described with reference to its extended configuration shown in Figure 2, since in the collapsed configuration (Figure 3) the canopy 26 is crumpled. The canopy 26 has a top 52, left and right sides 54, and a rear side 56. As can be seen, in the extended configuration the top 52 of the canopy 26 has an arcuate lateral profile. Also, in this configuration the front end of the top 52 is vertically lower than the rear end of the top 52. The top 52 defines a recess 58 in a front portion thereof. The recess 58 is shaped such that when the canopy assembly 10 is in the extended configuration as shown in Figure 1, should the passenger of the seat 12 in front of the seat 12 provided with the canopy assembly 10 decide to recline the backrest 18, the top of the backrest 18 will be received in the recess 58. The recess 58 also allows the passenger 24 to properly see the tray 59 (Figure 1) when it is lowered, as well as anything placed on the tray (food, magazine, laptop, etc.) when the canopy 26 is in the extended configuration. It is contemplated that in some embodiments the recess 58 could be omitted. The left and right sides 54 extend downward from the left and right edges of the top 52 of the canopy 26 respectively. The left and right sides 54 are generally shaped like a circular sector. In the present embodiment, this circular sector has a central angle X of less than 90 degrees, more specifically between 70 and 85 degrees, but other angles are contemplated. As can be seen the lower ends of the left and right sides 54 do not cover the discs 46 of the frame assembly 28, but it is contemplated that they could. The rear side 56 extends vertically downward from the rear end of the top 52 and extends laterally between the left and right sides 54, more specifically laterally between upper portions of the left and right sides 54. It is contemplated that in some embodiments, the rear side 56 could be omitted.

The top 52 and sides 54 of the canopy 26 define sleeves 60. The frame members 34, 36, 38 are received in these sleeves 60 so as to support the canopy 26. Also, by being placed in the sleeves 60, the intermediate and front frame members 36, 38 move with and are pivoted by the canopy 26 as the canopy 26 is being moved between its extended and collapsed configurations. In an alternative embodiment, it is contemplated that the canopy 26 could have two layers attached together at their edges and between which the frame members 34, 36, 38 are received, with the frame members 34, 36, 38 being connected to their corresponding portions of the canopy 26 so as to move therewith. In alternative embodiments, it is contemplated that the canopy 26 could be disposed outside or inside the frame members 34, 36, 38 with the frame members 34, 36, 38 being connected to their corresponding portions of the canopy 26 so as to move with and support the canopy 26, such that the frame members 34, 36, 38 would be visible.

As previously mentioned, the canopy 26 is made of opaque material. It is contemplated that in some embodiments, part of the top 52 could be made from clear material, such as clear flexible plastic, to let light through the top 52 of the canopy 26 and/or to let the passenger 24 see in front of the canopy 26 when the canopy 26 is in the extended configuration. In the present embodiment, the canopy 26 is made of non-woven textile, more specifically medical grade non-woven textile. In some embodiments, a fire and smoke retarding treatment is applied to the textile. It is contemplated that an antibacterial coating could be applied to the non-woven textile, or that the canopy 26 could be made from antibacterial material. It is contemplated that the canopy 26 could be made of a material that is easily disposable. In alternative embodiments, the canopy 26 is made of fabric, preferably fabric that can be easily cleaned in order for it to be reused. It is also contemplated that the material used for the canopy 26 could limit or prevent the passage of light therethrough. It is also contemplated that the canopy 26 could be made from acoustic dampening material or could be provided with a layer of such material. Other types of materials are also contemplated.

As seen in Figure 1, when the canopy assembly 10 is provided on the seat 12 in the extended configuration, the top 52 of the canopy 26 disposed above the passenger seating area 22 and therefore above the passenger 24, the left side 54 of the canopy 26 partially covers a left side of the passenger seating area 22, and the right side 54 of the canopy 26 partially covers a right side of the passenger seating area 22 such that the canopy assembly 10 defines a generally arch-shaped cover over the passenger seating area 22.

As previously mentioned, the canopy assembly 10 includes two connectors 32 used to maintain the canopy 26 in its collapsed configuration and to maintain the frame assembly 28 in its corresponding position. As the two connectors 32 are mirror images of each other, only the left connector 32 will be described in detail herein. With reference to Figure 2, the left connector 32 includes two bands 62, 64 corresponding to different sides of a hook and loop fastener, such as Velcro™ for example. The band 62 is attached at one end to the top, rear, left portion of the canopy 26. The band 64 is attached to the interior surface of the left side 54 of the canopy 26 at top, front portion thereof. When the canopy 26 is placed in its collapsed configuration, as shown in Figure 3, the band 62 is wrapped around the front of the canopy 26 and is attached to the band 64, thus maintaining the canopy 26 in the collapsed position. It is contemplated that instead of being connected directly to the canopy 26, the band 62 could be connected to a band of fabric or an elastic band that is connected to the canopy 26. It is also contemplated that instead of using a hook and loop fastener, the connectors 32 could use a different type of non-permanent fastener such as, but not limited to, magnets, pressure fasteners such as snap fasteners, and buttons and button holes. It is also contemplated that the bands 62, 64 could be replaced by two strings or two bands of fabric that can be knotted together or tied in a bow. It is contemplated that a single connector 32 could be provided by, for example, attaching the band 62 at the rear, center of the top 52 of the canopy 26 and attaching the band 64 at the front, center of the top 52. It is also contemplated that more than two connectors 32 could be provided.

As previously mentioned, the canopy assembly 10 includes non-permanent fasteners 30 used to removably connect the canopy assembly 10 to the backrest 18 of the passenger seat 12. In the present embodiment, the canopy assembly 10 has a left non-permanent fastener 30 connected to a rear portion of the left side 52 of the canopy 26, the canopy assembly 10 has a right non-permanent fastener 30 connected to a rear portion of the right side 52 of the canopy 26 and a rear fastener 30 connected to the rear side 56. More specifically, the left and right non-permanent fasteners 30 are connected to an outer surface of their respective sides 52 along rear edges thereof, and the rear non-permanent fastener 30 is connected to a rear surface of the rear side 56 along a lower edge thereof. It is contemplated that on or more of the non-permanent fasteners 30 could be omitted. It is also contemplated that more than three non-permanent fasteners 30 could be provided. In alternative embodiments where the rear frame member 34 is not completely covered by the canopy 26, it is contemplated that one or more of the non-permanent fasteners 30 could be connected the rear frame member 34.

In the present embodiment, the non-permanent fasteners 30 are bands 66 of one side of hook and loop fasteners, such as Velcro™ for example. Bands (not shown) corresponding to the opposite side of the hook and loop fasteners are provided along the left and right sides of the backrest 18 and at the top of the backrest 18 (i.e. on the headrest) so as to engage with the corresponding bands 66 on the canopy 26 to attach the canopy assembly 10 to the backrest 18 of the seat 12. In some embodiments, the hook sides of the hook and loop fasteners are provided on the canopy 26 and the loop sides of the hook and loop fasteners are provided on the backrest 18 such that when the canopy assembly 10 is not mounted to the backrest, the bands of loops on the backrest 18 will provide a soft surface that would not inadvertently scratch a passenger the way bands of hooks could. The use of hook and loop fasteners allow for the easy and quick installation and removal of the canopy assembly 10. The use of hook and loop fasteners also allows for some degree of adjustment of the position of the canopy assembly 10 on the seat 12 in order to account for different passenger heights. Seats of aircraft can be easily modified by adding bands of hook and loop fastener to allow the installation of canopy assemblies 10. It is contemplated that the hook and loop fasteners could be replaced by other types of non-permanent fasteners such as, but not limited to, magnets, pressure fasteners such as snap fasteners, and buttons and button holes.

In an alternative embodiment, the non-permanent fasteners 30 are two vertically spaced hooks provided at the back of each arm 44 of the frame member 34. In such an embodiment, the backrest 18 is provided with two vertically spaced pins on each side thereof. To install the canopy assembly 10 on the seat 12, the hooks are attached to their corresponding pins. It is contemplated that more than two pins could be provided on each side of the backrest 18 to allow for height adjustment of the canopy assembly 10. It is also contemplated that more than two pins and two hooks could be provided on each side of the frame member 34 and the backrest 18. It is also contemplated that the pins could be provided on the canopy assembly 10 and the hooks could be provided on the backrest 18.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. A canopy assembly for a seat of a mass transportation vehicle comprising:
a retractable frame assembly including:
at least one rear frame member; and
at least one front frame member pivotally connected to the at least one rear frame member about a pivot axis,
the at least one front frame member being pivotable between a first position and a second position,
the at least one front frame member pivoting from the first position to the second position by pivoting away from the at least one rear frame member,
the at least one front frame member pivoting from the second position to the first position by pivoting toward the at least one rear frame member;
a flexible canopy supported by the retractable frame assembly, the canopy having a top, a left side and a right side,
the canopy having a collapsed configuration and an extended configuration,
the canopy being in the collapsed configuration when the at least one front frame member is in the first position,
the canopy being in the extended configuration when the at least one front frame member is in the second position; and
at least one non-permanent fastener connected to at least one of:
the at least one rear frame member, and
the canopy,
for removably connecting the canopy assembly to the seat;
in the extended configuration, when the canopy assembly is provided on the seat, the top of the canopy being disposed at least partially above a passenger seating area of the seat, the left side of the canopy at least partially covering a left side of the passenger seating area, and the right side of the canopy at least partially covering a right side of the passenger seating area such that the canopy assembly defines a generally arch-shaped cover over the passenger seating area.

2. The canopy assembly of claim 1, wherein the canopy defines a plurality of sleeves, each of the at least one rear frame member and each the at least one front frame member is received in a corresponding sleeve of the plurality of sleeves.

3. The canopy assembly of claim 1 or 2, wherein the at least one rear frame member is a generally C-shaped frame member having:
a laterally extending portion;
a left arm extending from a left end of the laterally extending portion to the pivot axis; and
a right arm extending from a right end of the laterally extending portion to the pivot axis.

4. The canopy assembly of any one of claims 1 to 3, wherein the at least one front frame member includes:
a left arm extending radially from the pivot axis; and
a right arm extending radially from the pivot axis,
the left arm being laterally spaced from the right arm, and
the left arm being separate from the right arm.

5. The canopy assembly of any one of claims 1 to 4, wherein the frame assembly further includes at least one intermediate frame member pivotally connected to the at least one rear frame member about the pivot axis,
the at least one intermediate frame member being disposed at least in part longitudinally between the at least one rear frame member and the at least one front frame member when the at least one front frame member is in the second position.

6. The canopy assembly of claim 5, wherein the at least one intermediate frame member is a generally C-shaped frame member having:
a laterally extending portion;
a left arm extending from a left end of the laterally extending portion to the pivot axis; and
a right arm extending from a right end of the laterally extending portion to the pivot axis.

7. The canopy assembly of claim 5 or 6, wherein the at least one intermediate frame member is two intermediate frame members.

8. The canopy assembly of any one of claims 1 to 7, wherein a front portion of the top of the canopy defines a recess.

9. The canopy assembly of any one of claim 1 to 8, wherein in the extended configuration the top of the canopy has an arcuate lateral profile, with a front end of the canopy being vertically lower than a rear end of the canopy.

10. The canopy assembly of any one of claims 1 to 9, further comprising at least one connector selectively connected to the canopy for maintaining the canopy in the collapsed configuration and the at least one front frame member in the first position.

11. The canopy assembly of any one of claims 1 to 10, wherein the canopy has a rear side extending vertically downward from a rear end of the top of the canopy and extending laterally between the left and right sides of the canopy.

12. The canopy assembly of claim 11, wherein the at least one non-permanent fastener is connected to a rear surface of the rear side of the canopy.

13. The canopy assembly of any one of claims 1 to 12, wherein the at least one non-permanent fastener includes a left non-permanent fastener connected to a rear portion of the left side of the canopy and a right non-permanent fastener connected to a rear portion of the right side of the canopy.

14. The canopy assembly of any one of claims 1 to 13, wherein the at least one non-permanent fastener is at least one band of a hook and loop fastener.

15. The canopy assembly of any one of claims 1 to 14, wherein the canopy is made from non-woven textile.
